**Europäisches Patentamt**

**European Patent Office**

**Office européen des brevets**

(19)

(11) Numéro de publication : **0 491 637 A1**

# (12) DEMANDE DE BREVET EUROPEEN

(21) Numéro de dépôt : **91440087.4**

(22) Date de dépôt : **07.11.91**

(51) Int. Cl.⁵ : **C08J 7/04, A22C 13/00**

(30) Priorité : **19.12.90 FR 9016208**

(43) Date de publication de la demande :
**24.06.92 Bulletin 92/26**

(84) Etats contractants désignés :
**AT BE CH DE DK ES GB GR IT LI LU NL SE**

(71) Demandeur : **BRODART S.A.**
**BP 6, Zone Industrielle Est**
**F-10700 Arcis sur Aube (FR)**

(72) Inventeur : **Brodart, Michel**
**Rue des Pointes**
**F-10700 Torcy-Le-Grand (FR)**
Inventeur : **Richard, Pierre**
**Rue de la Gironde**
**F-10700 Arcis Sur Aube (FR)**

(74) Mandataire : **Arbousse-Bastide, Jean-Claude**
**Philippe**
**CABINET ARBOUSSE BASTIDE 20, rue de**
**Copenhague**
**F-67000 Strasbourg (FR)**

(54) **Matériau d'emballage composite destiné aux produits alimentaires à taux d'humidité élevé, notamment aux fromages à pâtemolle.**

(57)    Matériau d'emballage composite destiné aux produits alimentaires à taux d'humidité élevé, notamment aux fromages à pâte molle, du type comportant deux films superposés (2, 6) assemblés par des bandes de colle (5).

    Le film extérieur (2) comporte à sa face interne un enduit filmogène (4) renfermant des particules (41) d'un polymère hydrosorbant.

Fig 2

La présente invention a pour objet un nouveau type de matériau d'emballage composite destiné aux produits alimentaires à taux d'humidité élevé, notamment aux fromages, et plus spécialement aux fromages à pâte molle. Elle a également pour objet le procédé de fabrication de ce matériau composite.

On sait que les fromages à pâte molle à croûte fleurie, du type brie, coulommier, camembert et autres, ainsi que les fromages à pâte molle à croûte lavée, du type reblochon, munster et autres, nécessitent après leur emballage un complément d'affinage qui se poursuit jusqu'à leur consommation, laquelle intervient parfois 4 à 5 semaines après leur emballage. Au cours de cet affinage, le fromage est soumis à des échanges gazeux avec le milieu ambiant, absorbant de l'oxygène et rejetant du gaz carbonique et de la vapeur d'eau.

Pour cette raison, les feuilles d'emballage de ce type de fromages doivent présenter une perméabilité suffisante à ces différents gaz pour leur permettre une bonne évolution dans le temps.

Toutefois, ces produits devant conserver un taux d'humidité assez important, il convient en outre que l'emballage laisse passer la vapeur d'eau de manière contrôlée, afin d'éviter leur dessèchement.

Pour cet ensemble de raisons, on utilise généralement, pour l'emballage de ce type de produits, soit du papier paraffiné, soit une pellicule cellulosique perforée, soit des matériaux composites tels que les assemblages film cellulosique-papier paraffiné, papier surcouché-papier paraffiné, aluminium-papier cristal-papier paraffiné.

Parmi ces emballages connus, les meilleurs résultats sont obtenus, au plan de la conservation, de l'affinage et de la présentation du produit emballé, par les assemblages pellicule cellulosique-papier paraffiné : le papier paraffiné est placé au contact du fromage, absorbant une partie de l'eau de ce dernier et la désorbant au travers de la pellicule cellulosique extérieure, laquelle présente une perméabilité suffisante pour éviter des condensations de surface préjudiciables à la qualité du produit.

Toutefois les pellicules cellulosiques, enduites ou non d'un enduit nitrocellulosique, ont une perméabilité à la vapeur d'eau trop élevée, conduisant à un dessèchement trop rapide du fromage qui limite sa durée de conservation.

Pour remédier à cet inconvénient, on a proposé d'introduire de la paraffine dans l'enduit nitrocellulosique et de perforer ladite pellicule, néanmoins on a pu constater que les fromages à pâte molle enveloppés dans ce type d'emballage présentaient une mauvaise évolution dans le temps, du fait d'une condensation de vapeur d'eau plus importante par points, ce qui entraînait la nécrose en ces points de la flore microbienne.

Une autre solution au problème posé a été proposée dans le document EP-A-0 008 961, qui suggère de disperser dans le vernis nitrocellulosique des particules de caséine ou d'amidon, lesquelles possèdent la propriété d'absorber la vapeur d'eau issue du fromage.

Toutefois un tel emballage, s'il offre des avantages certains par rapport aux emballages préalablement existants, présente l'inconvénient de ne pas être opaque, et de plus l'enduit a tendance à se décoller et à se déposer à la surface du fromage.

D'autre part la conservabilité des fromages avec ce type d'emballage est de l'ordre de 6 à 7 semaines : or il est souhaitable de pouvoir prolonger cette durée de 3 ou 4 semaines supplémentaires, en vue notamment des exportations lointaines.

La présente invention vise à résoudre le problème ainsi posé en proposant un nouveau type d'emballage qui permet de mieux réguler les échanges de vapeur d'eau entre le fromage et le milieu ambiant, augmentant de ce fait sa durée de conservation.

La présente invention a ainsi pour premier objet un matériau d'emballage composite pour fromages à pâte molle, ce matériau composite se caractérisant essentiellement en ce qu'il comprend au moins deux films superposés, la face interne du film extérieur comportant un enduit renfermant des particules d'un polymère hydrosorbant.

Le polymère hydrosorbant mis en oeuvre peut être un copolymère d'alcool vinylique et d'acide acrylique, un polymère acrylique, un copolymère acide maléique-isobutylène ou une carboxyméthylcellulose, cette énumération n'étant pas limitative.

Selon une caractéristique de l'invention, le copolymère hydrosorbant est mis en oeuvre sous forme de particules dont le diamètre moyen est compris entre 5 et 24$\mu$.

Selon une autre caractéristique de l'invention, le polymère hydrosorbant est mis en oeuvre sous forme de dispersion dans un enduit filmogène qui est appliqué sur la face interne du film extérieur de l'emballage, étant dispersé dans cet enduit dans des proportions qui sont fonction du type de produit à conditionner, et qui varient de 5 à 50 % en poids de la masse de matière sèche contenue dans l'enduit. Pour un fromage à pâte molle, ces proportions sont préférentiellement d'environ 20 à 30 % en poids.

Conformément à l'invention, l'enduit mis en oeuvre peut être tout type de vernis filmogène, tel qu'un vernis nitrocellulosique, un vernis à base d'acétochlorure de vinyle, un vernis de dilution de même nature que celui de l'encre utilisée pour réaliser une impression polychrome sur le film extérieur, ou encore un vernis dont le filmogène est lui-même absorbant, comme celui que constituent les alcools polyvinyliques, cette énumération n'étant pas limitative.

Les films extérieur et intérieur de l'emballage composite selon l'invention peuvent être consitués chacun d'une pellicule cellulosique, d'une matière plastique ou de papier, et ils peuvent être si nécessaire microperforés.

A titre d'exemple de matières plastiques utilisables à cette fin, on peut citer notamment les polyesters, les polyoéfines et les polyamides, cette énumération n'étant pas limitative.

Le film extérieur de l'emballage selon l'invention peut comporter à sa face interne une impression polychrome réalisée préalablement à son enduction avec l'enduit incorporant la poudre de polymère hydrosorbant.

Le film intérieur de l'emballage selon l'invention peut d'autre part être recouvert à sa face interne en contact avec le produit à emballer d'un produit cireux tel que la paraffine, la paraffine dopée ou un hot-melt, ou d'un produit permettant la scellabilité à froid ou à chaud ou encore d'un produit permettant de modifier sa perméabilité, cette énumération n'étant pas limitative.

Le matériau d'emballage composite selon l'invention peut être fabriqué selon la succession d'opérations ci-après :

- éventuellement réalisation d'une impression polychrome sur la face interne du film extérieur ;
- incorporaion, dans le vernis choisi, de la quantité de polymère hydrosorbant appropriée ;
- enduction de la face interne du film extérieur à l'aide du mélange vernis-polymère hydrosorbant ;
- éventuellement microperforation du film ;
- assemblage du film, à l'aide de traits de colle, avec le film intérieur, éventuellement préalablement enduit à sa face interne d'un produit cireux.

Le matériau d'emballage composite selon l'invention présente l'avantage de créer entre les deux films extérieur et intérieur, grâce aux polymères hydrosorbants, une ambiance humide intermédiaire qui fait office de tampon, permettant de réguler plus facilement les échanges de vapeur d'eau.

En effet, les fromages à pâte molle, qui ont à leur emballage une activité d'eau (aw) de 0,98-0,99 sont stockés dans des chambres froides maintenues à une température de 2°C à 7°C, dont le taux d'humidité relative est compris entre 50 et 95 %, et plus généralement entre 70 et 80 %, l'échange de vapeur d'eau se faisant du fromage vers l'extérieur.

L'ambiance intermédiaire créée par le polymère hydrosorbant ayant une humidité relative de 85 à 90 %, on comprend aisément le rôle de régulateur joué par ce polymère.

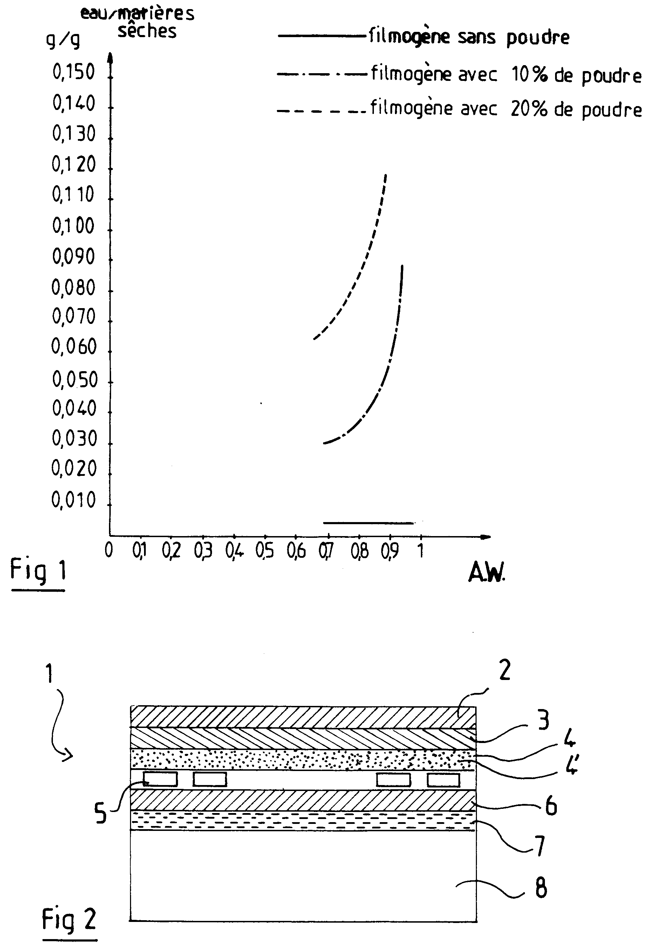

Les courbes de sorption effectuées sur des filmogènes contenant des pourcentages variables de polymère hydrosorbant démontrent l'efficacité de ce type de polymère à capter l'humidité, ainsi que l'illustre la figure 1 du dessin annexé.

La présente invention se trouve également illustrée par la figure 2 du dessin annexé, qui en représente un mode de réalisation non limitatif.

Si on se réfère d'abord à la figure 1, les courbes qui y sont représentées ont été effectuées sur un filmogène contenant des pourcentages variables, de poudre de polymère hydrosorbant, en l'occurence 10 et 20 %. Ces courbes montrent clairement que le filmogène renfermant 20 % de poudre de polymère hydrosorbant fournit de meilleurs résultats que celui en renfermant 10 %.

Si on se réfère ensuite à la figure 2, on voit sur cette figure un produit humide 8 tel qu'un fromage à pâte molle, recouvert par l'emballage composite 1 de l'invention, lequel comprend un film extérieur 2 sur la face interne duquel est appliquée une impression polychrome 3 puis un enduit 4 renfermant des particules 41 de polymère hydrosorbant, l'ensemble étant solidarisé au moyen de bandes de colle 5 au film intérieur 6, lequel comporte à sa face interne un produit cireux 7 qui vient au contact du produit humide 8.

L'exemple ci-après illustre d'autre part un mode de réalisation de l'invention, étant bien entendu qu'il ne présente vis à vis d'elle aucun caractère limitatif.

EXEMPLE

Sur un film de polyester de 6μ d'épaisseur on réalise une impression hélio avec des encres polychromes, dont un blanc couvrant la totalité de sa surface.

On réalise ensuite le mélange vernis-polymère hydrosorbeur en incorporant dans un vernis de dilution de même nature que l'encre une poudre d'un copolymère hydrosorbant acrylique-vinylique, à raison de 20g de poudre pour 100g de matière solide du vernis.

On enduit la couverture d'encre blanche de la face interne du film de polyester à l'aide de ce vernis, à raison d'environ 5g/m². Le film est ensuite microperforé, constituant le film supérieur de l'emballage.

Ce film est assemblé à l'aide de traits de colle avec un papier paraffiné sur sa face interne, la face paraffinée étant destinée à être au contact du fromage.

L'emballage ainsi réalisé a servi à emballer des fromages type brie qui ont été testés plusieurs semaines après stockage, en même temps que des témoins réalisés avec un emballage classique constitué d'une pellicule cellulosique associée à un papier paraffiné.

Les fromages emballés dans les emballages selon l'invention ont révélé un affinage similaire et une perte de poids inférieure. Une observation prolongée a permis de constater que leur durée de vie était notablement supérieure aux fromages emballés dans des emballages de type connu.

Il va de soi que la présente invention ne saurait être limitée à la description qui précède d'un de ses modes de réalisation, susceptible de subir un certain nombre de modifications sans pour autant sortir du cadre de l'invention. En particulier l'emballage composite selon l'invention peut être utilisé pour d'autres types de produits alimentaires, comme par exemple des fruits ou des légumes.

## Revendications

**1)** Matériau d'emballage composite destiné aux produits alimentaires à taux d'humidité élevé, notamment aux fromages à pâte molle, du type comportant deux films superposés (2, 6) assemblés par des bandes de colle (5), caractérisé en ce que le film extérieur (2) comporte à sa face interne un enduit filmogène (4) renfermant des particules (41) d'un polymère hydrosorbant.

**2)** Matériau d'emballage selon la revendication 1, caractérisé en ce que le polymère hydrosorbant est choisi dans le groupe formé par les copolymères d'alcool vinylique et d'acide acrylique, les copolymères d'acide maléique et d'isobutylène et la carboxyméthylcellulose.

**3)** Matériau d'emballage selon la revendication 1 ou la revendication 2, caractérisé en ce que les particules du polymère hydrosorbant ont un diamètre moyen compris entre 5μ et 24μ.

**4)** Matériau d'emballage selon l'une quelconque des revendications précédentes, caractérisé en ce que le polymère hydrosorbant est dispersé dans l'enduit à raison de 5 à 50 % en poids par rapport à la matière solide dudit enduit.

**5)** Matériau d'emballage selon la revendication 4, caractérisé en ce que l'enduit filmogène est choisi dans le groupe formé par les vernis cellulosiques, les vernis à base d'acétochlorure de vinyle, les vernis de dilution des encres et les vernis dont le filmogène est lui-même absorbant, comme ceux constitués par les alcools polyvinyliques.

**6)** Matériau d'emballage selon l'une quelconque des revendications précédentes, caractérisé en ce que le film extérieur (2) et le film intérieur (6) sont réalisés en un matériau choisi dans le groupe formé par les pellicules cellulosiques, les matières plastiques et le papier.

**7)** Matériau d'emballage selon la revendication 5, caractérisé en ce que le film extérieur (2) est microperforé.

**8)** Matériau d'emballage selon la revendication 5, caractérisé en ce que le film intérieur (6) est enduit à sa face interne d'un produit cireux ou d'un produit permettant la scellabilité à froid ou à chaud.

**9)** Procédé de fabrication d'un matériau d'emballage selon les revendications 1 à 8, caractérisé en ce qu'il comporte la succession d'opérations ci-après :

  – incorporation, dans l'enduit filmogène choisi, de la quantité de polymère hydrosorbant appropriée.

  – enduction de la face interne du film extérieur à l'aide du mélange ainsi formé.

  – assemblage du film extérieur avec le film intérieur au moyen de bandes de colle.

**10)** Procédé selon la revendication 8, caractérisé en ce que le film extérieur est préalablement soumis à une impression polychrome.

eau/matières
sèches
g/g

——————— filmogène sans poudre

— · — · — filmogène avec 10 % de poudre

— — — — filmogène avec 20 % de poudre

0,150
0,140
0,130
0,120
0,110
0,100
0,090
0,080
0,070
0,060
0,050
0,040
0,030
0,020
0,010

0  0,1  0,2  0,3  0,4  0,5  0,6  0,7  0,8  0,9  1        A.W.

Fig 1

Fig 2

Office européen
des brevets

# RAPPORT DE RECHERCHE EUROPEENNE

Numero de la demande

EP 91 44 0087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 260 250 (SOC. CIVILE DES PRODUITS LIFINE) <br> * page 1, colonne 2 * <br> * page 2, colonne 2 - page 3 * <br> --- | 1 | C08J7/04 <br> A22C13/00 |
| A | EP-A-0 319 732 (VISKASE CORP.) <br> * revendications 1-10 * <br> --- | 1 | |
| D,A | EP-A-0 008 961 (LA CELLOPHANE) <br> * revendications 1-11 * <br> --- | 1 | |
| A | EP-A-0 336 796 (LUISSIER BORDEAU CHESNEL) <br> * revendications 1-23 * <br> --- | 1 | |
| A | DE-A-2 724 252 (HOECHST) <br> * revendications 1-18 * <br> --- | 1 | |
| A | US-A-3 743 511 (J. L. STEFANEC) <br> * revendications 1-6 * <br> --- | 1 | |
| A | US-A-2 181 886 (L. A. GOODMAN) <br> * revendications 1-4 * <br> ----- | 1 | DOMAINES TECHNIQUES RECHERCHES (Int. Cl.5) <br><br> C08J <br> A22C |

Le présent rapport a été établi pour toutes les revendications

| Lieu de la recherche | Date d'achèvement de la recherche | Examinateur |
|---|---|---|
| LA HAYE | 19 DECEMBRE 1991 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)